# EUROPEAN PATENT SPECIFICATION

(11) **EP 0 558 074 B1**
(45) Date of publication and mention of the grant of the patent: **07.02.1996**
(21) Application number: 93103138.9
(22) Date of filing: 26.02.1993
(51) Int. Cl.: G02B 5/08

(54) **Polygon mirror**
Polygonspiegel
Miroir polygonal

(30) Priority: 26.02.1992 JP 75322/92
(43) Date of publication of application: 01.09.1993
(73) Proprietor: EBARA CORPORATION, Ohta-ku Tokyo (JP)
(72) Inventor: Isobe, Soichi, Yokohama-shi, Kanagawa-ken (JP); Komata, Kimio, Saitama-ken (JP); Ishii, Toshiaki, Kanagawa-ken (JP); Komai, Yuuichi, Kanagawa-ken (JP)
(74) Representative: Wagner, Karl H.

(56) References cited:
- DE-A- 2 722 821
- US-A- 4 984 881
- PATENT ABSTRACTS OF JAPAN vol. 13, no. 303 (P-896)12 July 1989 & JP-A-10 78 215
- PATENT ABSTRACTS OF JAPAN vol. 16, no. 121 (P-1329)26 March 1992 & JP-A-32 88 116
- PATENT ABSTRACTS OF JAPAN vol. 13, no. 85 (P-834)27 February 1989 & JP-A-63 266 420

## Description

The present invention relates to a polygon mirror acting as a rotor in a polygon mirror scanner motor.

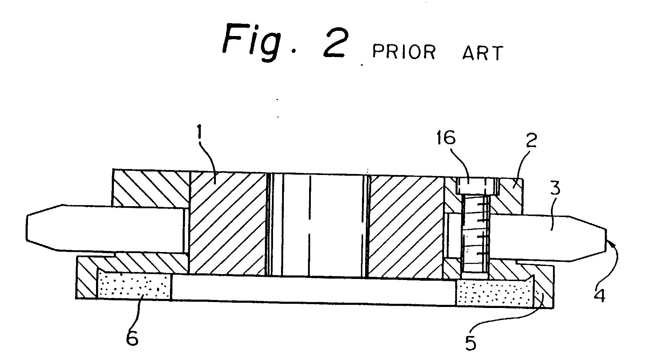

Fig. 2 is a sectional view showing a construction of such a rotor in the polygon mirror scanner motor of conventional type. In Fig. 2, reference numeral 1 denotes a ceramic ring. A yoke 2 is shrink-fitted into the ceramic ring 1. Then, the surfaces of the yoke 2 and a yoke 5 in contact with a mirror surface formation member 3 defining a mirror surface 4 are finished with a higher degree of planeness and surface roughness. The mirror surface formation member 3 is firmly clamped between the yoke 2 and the yoke 5 with a plurality of screws 16. Furthermore, a rotor magnet 6 having a plurality of magnet poles of the motor is fixedly secured to the underside of the yoke 5. A polygonal mirror rotor in which shrinkage fitting has been used is known from JP-A-63 266 420.

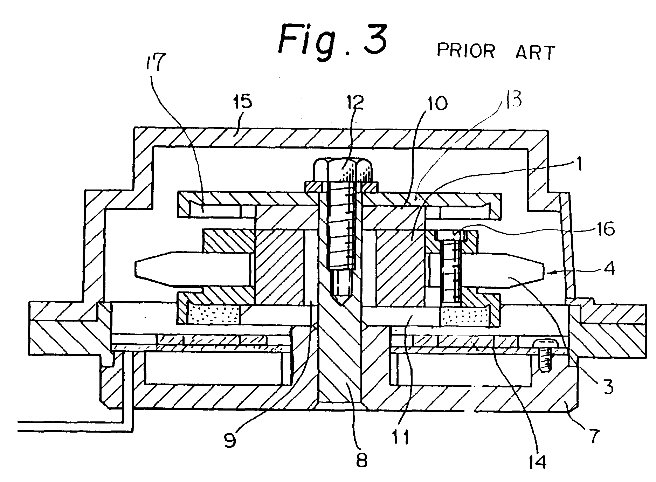

Fig. 3 is a sectional view showing a construction of a polygon mirror scanner motor employing the rotor shown in Fig. 2. A supporting shaft 8 on a mount 7 extends through the ceramic ring 1. A radial bearing member 9 is firmly secured to the supporting shaft 8 so as to intervene between the supporting shaft 8 and the ceramic ring 1. Moreover, thrust plates 10 and 11 are fixedly secured to the supporting shaft 8 so as to confront top and bottom end surfaces of the ceramic ring 1, respectively. A thrust dynamic pressure bearing is defined by the top and bottom end surfaces of the ceramic ring 1 and correspondingly confronting surfaces of the thrust plates 10 and 11. A radial dynamic pressure bearing is defined by the inner periphery of the ceramic ring 1 and the outer periphery of the radial bearing member 9. Reference numeral 12 designates a fixing bolt for fixing the thrust plates 10 and 11, the radial bearing member 9, and mounting plate 13 to the supporting shaft 8. A stator coil 14 is arranged on the top surface of the mount 7 so as to confront the rotor magnet 6. Reference numeral 15 indicates a cover.

In the polygon mirror scanner motor having the above construction, when the stator coil is sequentially energized, the inner periphery of the ceramic ring 1 of the rotor is supported on the radial bearing member 9, and the top and bottom end surfaces of the rotor are supported on the confronting surfaces of the thrust plates 10 and 11 for rotation. It is to be noted that the supporting shaft 8 and the radial bearing member 9 are called a fixing shaft, and that the supporting shaft 8 may solely (without the radial bearing member 9) comprise the fixing shaft. In this case, the fixing shaft (supporting shaft) serves also as the radial bearing member. A rotation supporting device of a polygon mirror is known from US-A-4,984,881.

However, the conventional rotor, that is, the polygon mirror described above has the following disadvantages.
(1) Since the yoke 2 is shrink-fitted into the ceramic ring 1, the outer diameter of the ceramic ring 1 and the inner diameter of the yoke 2 must be finished with a higher accuracy of roundness, cylindrical degree, surface roughness, and dimensional tolerance, which leads to a rise in cost for machining the ceramic ring 1 and the yoke 2.
(2) Furthermore, after the shrink-fitting of the yoke 2 into the ceramic ring 1, the surface of the yoke 2 in contact with the mirror surface formation member 3 must be subjected to secondary machining to obtain strict planeness and surface roughness. Additionally, at the time of assembly, the mirror surface formation member 3 must be fixedly secured to the yoke 5 using the screw 16 with a predetermined controlled torque, which disadvantageously leads to an increased number of assembling steps. Moreover, an unbalanced rotor as a whole may arise from looseness in the fitting section which is inevitably caused by the entire assembly irrespective of the improved dimensional accuracy of the parts themselves, resulting in numerous steps to correct the balance.
(3) Furthermore, depending on the degree of fastening the screw 16, the mirror surface 4 may present a minute deformation, which in particular exerts a remarkable adverse influence, at the time of actual rotation, on the surface stability and Jitter characteristic of the motor. The mirror surface formation member 3 must be provided with several through-holes for receiving several screws, which inconveniently leads to an increase in the number of machining steps, including processing of the corners after the provision of the holes. As a result, the cost for manufacturing the mirror is increased.
(4) Moreover, the yoke 2 has a lower height than the ceramic ring 1 when the shrink-fitting is performed, and hence the height of the ceramic ring undergoes a shrink-fit. Thus, uneven shrink-fitting stress is inevitably applied to the ceramic ring after the shrink-fitting, which may possibly bring about a crack in the ceramic ring 1 in an extreme instance. In addition, the inner diameter and the top and bottom end surfaces of the ceramic ring 1 are liable to be subjected to a deformation, which results in uneven thrust clearance and radial clearance between the rotor and the stator when being incorporated into the scanner motor for rotation, which in turn adversely influences the rotational displacement of the motor. This is a cause of poor surface stability and jitter characteristic of the motor.

In view of the foregoing, the present invention was conceived, of which the object is to provide a polygon mirror easy to machine and having fewer assembling steps and presenting an extremely superior rotational performance.

In order to solve the above problems, a polygon mirror according to the present invention comprises a rotor including a ceramic ring and including yokes and a mirror surface formation member each being secured to the outer periphery of the ceramic ring; and a stator having a fixing shaft passing through the ceramic ring, in which a radial dynamic pressure bearing is defined by the inner periphery of the ceramic ring and the outer periphery of the fixing shaft, and in which a thrust dynamic pressure bearing is defined by both end surfaces of the ceramic ring and confronting surfaces of a thrust plate fixedly secured to the stator so as to confront both end surfaces of the ceramic ring, wherein the ceramic ring, the yokes and the mirror surface formation member are integrally molded in material making up the mirror surface formation member to form the rotor.

According to the present invention, the ceramic ring, the yokes and the mirror surface formation member are integrally molded in a material making up the mirror surface formation member to thereby form the polygon mirror, and hence the number of parts, the number of steps for machining the parts, and the number of steps for assembling them are lessened.

Moreover, the molding over the entire height of the ceramic ring with material such as aluminum making up the mirror surface formation member leads to no occurrence of cracks in the ceramic ring due to even thermal stress being applied to the ceramic ring 1 in its height direction. Additionally, a uniform deformation in the inner diameter and upper and lower end surfaces results in a uniform thrust clearance of the thrust bearing and a radial clearance of the radial bearing in the case of being incorporated for rotation into a stator side of the scanner motor as shown in Fig. 3, thus ensuring a uniform thrust between the rotor and the stator of the motor and a clearance in the radial direction, thereby obtaining an improved surface stability and jitter characteristic of the motor, to cope with a higher-speed rotation.

Fig. 1 is a sectional view showing a structure of a polygon mirror rotor according to the present invention.

Fig. 2 is a sectional view showing a structure of a polygon mirror rotor of a conventional type.

Fig. 3 is a sectional view showing a structure of the polygon mirror scanner motor employing the rotor shown in Fig. 2.

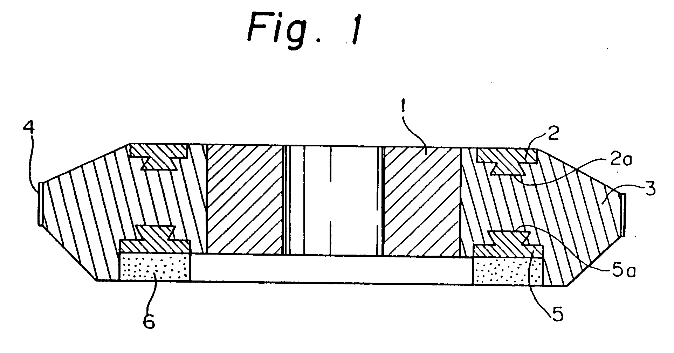

A preferred embodiment of the present invention will be described below with reference to the drawings. Fig. 1 is a sectional view showing a structure of a polygon mirror scanner motor incorporating a polygon mirror rotor according to the present invention. In Fig. 1, elements designated by the same reference numerals as in Fig. 2 represent the same or corresponding elements.

As shown in Fig. 1, the rotor comprises a ceramic ring 1, yokes 2 and 5, and a rotor magnet 6 which are integrally molded from aluminum to make up a mirror surface formation member 3. Incidentally, although the rotor magnet is also integrally molded in this instance, the ceramic ring 1, and yokes 2 and 5 may be integrally molded from the aluminum making up the mirror surface formation member 3 so as to solely manufacture the polygon mirror, while the rotor magnet 6 may be provided separately from the polygon mirror.

Furthermore, in order to enhance the strength (bond strength between the ceramic ring 1 and the mirror surface formation member 3) obtained after the integral molding with aluminum, the outer periphery (not shown) of the ceramic ring 1 may be formed with a notch, or alternatively may present a greater surface roughness. The yokes 2 and 5 include respective wedged protrusions 2a and 5a, thereby preventing the yokes 2 and 5 from disengaging from the mirror formation member after molding.

Furthermore, the rotor is preferably formed in a vertically symmetrical manner, and has dynamic balance correction points in place. Moreover, the rotor magnet 6 is not allowed to be exposed after the integral molding with aluminum making up the mirror formation member 3, so as to prevent disengagement therefrom.

After the integral molding of the ceramic ring 1, the yokes 2 and 5, and the rotor magnet 6 with aluminum making up the mirror formation member 3 as described above, their surfaces are machined and a mirror surface is finally formed by means of a vapor deposition for the manufacture of the rotor.

The integral molding of the ceramic ring 1 and yokes 2 and 5 with aluminum making up the mirror formation member 3 for the formation of the polygon mirror eliminates not only the necessity of providing a plurality of screws 16 but also the necessity of a difficult fastening operation with the controlled screw torque.

Furthermore, the yokes 2, 5 are molded from aluminum to ensure a simplified configuration, and the surfaces in contact with the mirror surface formation member 3 do not require a finish with a higher accuracy as in the prior art, which leads to a reduction in the cost for manufacturing these parts.

Moreover, the yoke 2 is not subjected to a shrink-fit into the ceramic ring 1 as in the prior art, and hence there is no need for secondary machining. That is, after molding, the machining is executed without pause, and the mirror surface 4 may be finally subjected to a vapor deposition. Since the machining and the vapor deposition are carried out on the basis of the ceramic ring 1 undergoing less deformation in particular, the rotor can present a well-balanced finish as well as a mirror surface 4 with improved accuracy. Therefore, the dynamic balance of the rotor can be easily corrected. In addition, there is no need for the provision of a through-hole in the mirror formation member 3 and the step of machining the corners.

Furthermore, the absence of shrink-fitting may advantageously lead to a relaxation in machining accuracy on the outer diameter of the ceramic ring 1 and the inner diameter of the yoke. Moreover, the molding with aluminum over the entire height of the ceramic ring leads to no occurrence of cracks in the ceramic ring due to even thermal stress being applied to the ceramic ring 1 in the height direction. Additionally, a uniform deformation in the inner diameter and upper and lower end surfaces results in a uniform thrust clearance of the thrust bearing and a radial clearance of the radial bearing in the case of being incorporated for rotation into a stator side of the scanner motor shown in Fig. 3, thus ensuring a uniform thrust between the rotor and the stator of the motor and a clearance in the radial direction, thereby obtaining improved surface stability and jitter characteristic of the motor.

Furthermore, due to the absence of the assembling steps for clamping the mirror surface formation member 3 between the yokes 2 and 5 and fastening them with a plurality of screws as in the prior art, the mirror surface is free from any deformation arising from this, thus ensuring improved surface stability and jitter characteristic of the motor.

In the case of high-speed rotation, the conventional polygon mirror scanner motor has an upper speed limit of rotation due to poor surface stability and jitter characteristic of the motor through interference between the parts, difference in thermal deformation and the like arising from centrifugal force. Such problems are overcome in this embodiment since these parts are integrally molded from aluminum. Moreover, a streamline in sectional configuration succeeds in suppressing windage loss during rotation as well as an increase in temperature arising therefrom. It is thus possible to obtain an even higher speed of rotation.

It is to be noted that the material making up the mirror surface formation member 3 is aluminum in the above-described embodiment, but an other metal or resin may be used without being limited to aluminum.

According to the present invention as described above, the ceramic ring, the yokes and the mirror surface formation member are integrally molded in material making up the mirror formation member to form a polygon mirror, and hence the following superior effects can be obtained as compared with the conventional ones.

(1) The number of parts, the number of steps for machining the parts, and the number of steps for assembling them are lessened.

Moreover, the absence of shrink fitting leads to a relaxed machining accuracy for parts, eliminates the necessity of secondary machining, and facilitates the correction of dynamic balance.

The integral molding with the material making up the mirror surface formation member ensures a uniform deformation in the inner diameter of the ceramic ring and the upper and lower end surfaces. Therefore, in the case of being incorporated for rotation into the stator side of the scanner motor, the thrust and radial clearances are kept even to improve surface stability and jitter characteristic of the motor.

In addition, the integral molding realizes a higher-speed rotation free of poor surface stability and jitter characteristic of the motor due to interference between the parts, a difference in the thermal deformation, and the like arising from centrifugal force during high-speed rotation as seen in the prior art.

## Claims

1. A polygon mirror scanner motor comprising; a rotor including a ceramic ring (1), yokes (2, 5) and a mirror surface formation member (3); said yokes (2, 5) and mirror surface formation member (3) being secured to an outer periphery of said ceramic ring (1); a stator having a fixing shaft (8, 9) passing through said ceramic ring (4) having a radial dynamic pressure bearing (9) defined by an inner periphery of said ceramic ring (1) and an outer periphery of said fixing shaft (9) and thrust dynamic pressure bearings defined by both end surfaces of said ceramic ring (1) and corresponding confronting surfaces of thrust plates (10, 11) fixedly secured to said stator so as to confront said both end surfaces of said ceramic ring (1),
characterized in that said ceramic ring (1), said yokes (2, 5) and said mirror surface formation member (3) are integrally molded in material making up said mirror surface formation member (3) to form said rotor.

2. The polygon mirror scanner motor of Claim 1, wherein said outer periphery of said ceramic ring (1) includes a notch to increase the bonding strength obtained after integral molding with material making up said mirror surface formation member (3).

3. The polygon mirror scanner motor of Claim 1, wherein said outer periphery of said ceramic ring (1) has a roughened surface.

4. The polygon mirror scanner motor of Claim 1, wherein said yokes (2, 5) are provided with a wedged protrusion (2a, 5a) for preventing disengagement after said integral molding with material making up said mirror surface formation member.

5. The polygon mirror scanner motor of Claim 1, wherein said rotor is molded in a vertically symmetrical manner.

6. The polygon mirror scanner motor of Claim 1, wherein said rotor includes a dynamic balance correction point.

7. The polygon mirror scanner motor of Claim 1, wherein said rotor includes a motor rotor magnet (6) integrally molded with material making up said mirror surface formation member (3).

8. A polygon mirror rotor comprising; a ceramic ring (1), yokes (2, 5) and a mirror surface formation member (3); characterised in that said ceramic ring (1), said yokes (2, 5) and said mirror surface formation member (3) are integrally molded, in material making up said mirror surface formation member (3).

## Patentansprüche

1. Ein Polygonspiegelscannermotor, der folgendes aufweist:
einen Rotor, der einen Keramikring (1), Joche (2,5) und ein Spiegeloberflächenformationsglied (3) umfaßt; wobei die Joche (2 und 5) und das Spiegeloberflächenformationsglied (3) an einem Außenumfang des Keramikrings (1) befestigt sind;
einen Stator mit einer Befestigungswelle (8,9), die durch den Keramikring (1) durchgeht mit einem dynamischen Radialdrucklager (9), daß durch einen Innenumfang des Keramikrings (1) und einen Außenumfang der Befestigungswelle (9) gebildet wird, und mit dynamischen Axialdrucklagern, die durch beide Endoberflächen des Keramikrings (1) und entsprechende gegenüberliegende Oberflächen von axial bzw. Schubplatten (10,11) definiert werden, die fest an dem Stator befestigt sind, um den beiden Endoberflächen des Keramikrings (1) gegenüber zu liegen, dadurch gekennzeichnet, daß der Keramikring (1), die Joche (2,5) und das Spiegeloberflächenformationsglied (3) integral ausgeformt sind aus einem Material, das das Spiegeloberflächenformationsglied (3) bildet, um den Rotor zu bilden.

2. Polygonspiegelscannermotor nach Anspruch 1, wobei der Außenumfang des Keramikrings (1) eine Nut oder Kerbe umfaßt, um die Verbindungsfestigkeit zu erhöhen, die nach der integralen Ausformung mit Material, das das Spiegeloberflächenformationsglied (3) bildet, zu erhalten.

3. Polygonspiegelscannermotor nach Anspruch 1, wobei der Außenumfang des Keramikrings (1) eine rauhe bzw. aufgerauhte Oberfläche besitzt.

4. Polygonspiegelscannermotor nach Anspruch 1, wobei die Joche (2,5) mit einem keilförmigen Vorsprung (2a,5a) versehen sind, zum Verhindern eines Außereingriffkommens bzw. Lösens nach dem integralen Ausformen mit Material, das das Spiegeloberflächenformationsglied bildet.

5. Polygonspiegelscannermotor nach Anspruch 1, wobei der Rotor in einer vertikal-symmetrischen Art und Weise ausgeformt ist.

6. Polygonspiegelscannermotor nach Anspruch 1, wobei der Rotor einen dynamischen Balance- oder Unwuchtkorrekturpunkt aufweist.

7. Polygonspiegelscannermotor nach Anspruch 1, wobei der Rotor ein Motorrotormagneten (6) aufweist, der integral mit dem Material ausgeformt ist, das das Spiegeloberflächenformationsglied (3) bildet,

8. Polygonspiegelrotor, der folgendes aufweist: einen Keramikring (1), Joche (2,5) und ein Spiegeloberflächenformationsglied (3), dadurch gekennzeichnet, daß der Keramikring (1) die Joche (2,5) und das Spiegeloberflächenformationsglied (3) integral ausgeformt sind aus einem Material, das das Spiegeloberflächenformationsglied (3) bildet.

## Revendications

1. Moteur de dispositif de balayage à miroir polygonal comprenant ; un rotor comportant une bague (1) en céramique, des culasses (2, 5) et un organe (3) de formation de surface à miroir ; les culasses (2, 5) et l'organe (3) de formation de surface à miroir étant fixés à une périphérie externe de la bague (1) en céramique ; un stator possédant un arbre (8, 9) de fixation traversant ladite bague (1) en céramique et possédant un palier (9) de pression dynamique radial délimité par une périphérie interne de ladite bague (1) en céramique et une périphérie externe dudit arbre (9) de fixation et des paliers de poussée de pression dynamique délimités par les deux surfaces d'extrémité de ladite bague (1) en céramique et les surfaces en regard correspondantes de plaques (10, 11) de poussée fixées de manière sûre audit stator de façon à être en regard desdites deux surfaces d'extrémité de la bague (1) en céramique, caractérisé en ce que la bague (1) en céramique, les culasses (2, 5) et l'organe (3) de formation de surface à miroir sont moulés d'une seule pièce en un matériau réalisant l'organe (3) de formation de surface à miroir pour former ledit rotor.

2. Moteur de dispositif de balayage à miroir polygonal selon la revendication 1, dans lequel la périphérie externe de la bague (1) en céramique comporte une encoche pour augmenter la force de liaison obtenue après le moulage d'une seule pièce à l'aide d'un matériau réalisant l'organe (3) de formation de surface à miroir.

3. Moteur de dispositif de balayage à miroir polygonal selon la revendication 1, dans lequel la périphérie externe de la bague (1) en céramique possède une surface rugueuse.

4. Moteur de dispositif de balayage à miroir polygonal selon la revendication 1, dans lequel les culasses (2, 5) possèdent des saillies à coins (2a, 5a) destinées à empêcher une désolidarisation après le moulage d'une seule pièce à l'aide d'un matériau réalisant l'organe de formation de surface à miroir.

5. Moteur de dispositif de balayage à miroir polygonal selon la revendication 1, dans lequel le rotor est moulé de manière symétrique verticalement.

6. Moteur de dispositif de balayage à miroir polygonal selon la revendication 1, dans lequel le rotor comporte un point de correction de l'équilibre dynamique.

7. Moteur de dispositif de balayage à miroir polygonal selon la revendication 1, dans lequel le rotor comprend un aimant (6) formant rotor de moteur moulé d'une seule pièce avec le matériau réalisant l'organe (3) de formation de surface à miroir.

8. Rotor de miroir polygonal comprenant une bague (1) en céramique, des culasses (2, 5) et un organe (3) de formation de surface à miroir ; caractérisé en ce que ladite bague (1) en céramique, les culasses (2, 5) et l'organe (3) de formation de surface à miroir sont moulés d'une seule pièce en un matériau réalisant l'organe (3) de formation de surface à miroir.
